(19) Europäisches Patentamt
European Patent Office
Office européen des brevets

(11) Numéro de publication: **0 061 962**
**A1**

(12) # DEMANDE DE BREVET EUROPEEN

(21) Numéro de dépôt: **82400501.1**

(22) Date de dépôt: **19.03.82**

(51) Int. Cl.³: **H 01 M 10/36**
H 01 M 6/18, H 01 M 4/60

(30) Priorité: **20.03.81 FR 8105568**

(43) Date de publication de la demande:
**06.10.82 Bulletin 82/40**

(84) Etats contractants désignés:
**DE GB**

(71) Demandeur: **Etablissement Public dit: CENTRE NATIONAL DE LA RECHERCHE SCIENTIFIQUE (CNRS)**
**15, Quai Anatole France**
**F-75007 Paris(FR)**

(72) Inventeur: **Beniere, François**
**Résidence la Frégate 33 rue Anatole le Braz**
**F-22700 Perros Guirec(FR)**

(72) Inventeur: **Louboutin, Jean-Pierre**
**30 rue de la Pointe**
**F-56290 Port Louis(FR)**

(72) Inventeur: **Franco, Juan Isidro c/o Cifeta**
**Zufriategui y Varela 1603 Villa Martelli**
**Buenos Aires(AR)**

(74) Mandataire: **Lemoine, Michel**
**13 bld des Batignolles**
**F-75008 Paris(FR)**

(54) **Nouveaux générateurs électrochimiques solides, procédés de préparation de ces générateurs et ébauches de générateur pour la mise en oeuvre de ces procédés.**

(57) Un générateur électrochimique comprend, entre les électrodes à conduction métallique usuelles (1, 5), au moins un élément constitué d'un électrolyte solide à superconducteur ionique (3) séparant, d'un corps solide générateur de matière active nétative (4), un polymère semi-conducteur (2) rendu, par dopage, conducteur de l'électricité et générateur de matière active positive de la réaction électrochimique.

Fig: 2

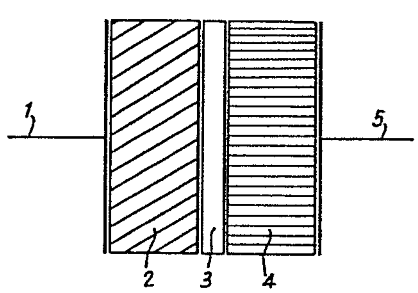


EP 0 061 962 A1

Nouveaux générateurs électrochimiques solides, procédés de préparation de ces générateurs et ébauches de générateur pour la mise en oeuvre de ces procédés.

---

L'invention a pour objet de nouveaux générateurs électrochimiques à superconducteurs ioniques et à polymères semi-conducteurs entièrement solides et fonctionnant à température ordinaire.

Dans un article publié dans la "RECHERCHE" n° 52 de janvier 1975 et consacré aux superconducteurs ioniques, l'un des coauteurs de la présente invention, le professeur F. BENIERE, a décrit la composition et les propriétés principales des superconducteurs ioniques et a précisé qu'on en attendait la réalisation d'accumulateurs solides d'électricité. Les principaux superconducteurs ioniques connus à l'heure actuelle et fonctionnant notamment à la température ordinaire peuvent être rangés dans deux catégories. La première catégorie comprend les dérivés d'addition de l'iodure d'argent AgI dont le prototype est l'iodure mixte d'argent et de rubidium de composition stoechiométrique $RbAg_4I_5$. Les autres dérivés de cette famille sont obtenus en remplaçant, soit le rubidium par un autre cation monovalent (potassium $K^+$, ion ammonium $NH_4^+$, etc.), soit l'iode par un mélange en toutes proportions d'halogénure ou de chalcogénure. La deuxième catégorie comprend l'alumine bêta dopée par des cations

monovalents, plus particulièrement l'alumine bêta dopée par un oxyde métallique ($Na_2O$,$Li_2O$, $Ag_2O$, etc.) qui est en général désignée simplement, en tant que superconducteur ionique, par "alumine bêta".

L'invention a notamment pour but de créer un générateur électrochimique non rechargeable (pile) ou rechargeable (accumulateur) qui soit capable de fonctionner à la température ordinaire en délivrant des f.é.m. (forces électromotrices) et des densités de courant de valeurs suffisantes et bien reproductibles.

Pour atteindre ce but, le générateur électrochimique conforme à l'invention, qui comprend :

- deux électrodes usuelles, métalliques ou en graphite ;
- un électrolyte solide ;
- un polymère semi-conducteur rendu, par dopage, conducteur de l'électricité de type p et générateur de la matière active positive de la réaction électrochimique ;
- un corps solide générateur de matière active négative pouvant être un polymère semi-conducteur rendu, par dopage, conducteur de l'électricité de type n ;

est essentiellement caractérisé en ce que l'électrolyte solide est constitué par un superconducteur ionique.

Il est à noter que, dans la demande de brevet européen n° 0036118 publiée le 23 septembre 1981 mais déposée le 28 février 1981 en revendiquant la priorité des demandes de brevet US 129 439 du 11 mars 1980 et 220.496 du 29 décembre 1980 (Alan G. McDiarmid et al.), il a été décrit un générateur électrochimique solide dont l'électrolyte en en suspension, en solution, voire à l'état solide est constitué par un halogénure de métal alcalin, en général par de l'oxyde de lithium. Il ne s'agit pas là d'un superconducteur ionique mais d'une substance qui n'est pas conductrice à la température ordinaire et qui doit être mise en oeuvre en couche très mince.

L'utilisation d'un superconducteur ionique en tant

qu'électrolyte solide apporte donc des avantages importants.

Le corps solide, générateur de matière active négative, peut être un métal tel que l'argent (argent fritté ou feuille d'argent) ou de préférence un polymère semi-conducteur rendu, par dopage, conducteur de l'électricité et générateur du susdit métal, généralement d'un métal alcalin ou de l'argent.

Comme polymère semi-conducteur dopé, on choisit de préférence le polyacétylène $(CH)_n$ bien que d'autres polymères, tels que le paraphénylène, puissent également être utilisés avec intérêt. Par matière active positive, on entend de préférence l'iode bien que le chlore et le brome puissent aussi convenir. C'est ainsi que, comme polymère semi-conducteur générateur de matière active positive, celui qui semble donner les meilleurs résultats est le polyacétylène dopé à l'iode $(CHIy)_n$. Comme polymère semi-conducteur générateur de matière active négative, on peut utiliser avec profit du polyacétylène ou du paraphénylène dopé au sodium, au potassium, à l'argent, etc.

Les générateurs électrochimiques conformes à l'invention ont pour avantages principaux :

- en raison de leur état entièrement solide, une étanchéité complète ainsi que la possibilité de fonctionner dans toutes les positions et d'être soumis à des accélérations importantes ;
- un fonctionnement normal dans une large gamme de température de part et d'autre de la température ambiante (- 90°C à + 120°C) ;
- une densité de courant importante (jusqu'à 120 mA par $cm^2$).

L'invention a également pour objet des procédés de préparation des générateurs électrochimiques qui viennent d'être définis.

Dans ces procédés, on prépare une ébauche de générateur comprenant au départ :

- les électrodes ;

- l'électrolyte solide constitué du superconducteur ionique (exemple : Rb $Ag_4$ $I_5$) ;
- un polymère non dopé devant être rendu semi-conducteur de type p par dopage et, du même coup, générateur de la matière active positive (exemple : iode) ;
- un générateur de matière active négative qui peut être un métal, un amalgame ou, mieux, un polymère non dopé devant être rendu semi-conducteur de type n par dopage et, du même coup, générateur de la matière active négative (exemples : argent, sodium).

Quatre aspects de ce procédé de préparation vont être définis ci-après.

Pour préparer un générateur électrochimique dont le, ou chaque, élément comprend, en tant qu'électrolyte solide, de l'iodure d'argent AgI et, en tant que générateur de matière active positive, un polymère semi-conducteur dopé à l'iode, on prépare une ébauche de générateur électrochimique en remplaçant initialement l'iodure d'argent par de l'argent pur et on fait fonctionner le générateur électrochimique, ce qui assure la formation spontanée de l'électrolyte solide par migration dans l'argent d'ions iode provenant du polymère dopé.

Pour préparer un générateur électrochimique dont le, ou chaque, élément comprend, en tant qu'électrolyte solide, du $RbAg_4I_5$ ou l'un de ses dérivés et où le générateur de matière active positive est un polymère organique rendu semi-conducteur de type p par dopage et simultanément générateur de la matière active iode, on prépare une ébauche de générateur électrochimique en y incorporant initialement le polymère organique à l'état non dopé ; puis, au cours de la première charge, on fait passer dans l'ébauche un courant de charge, ce qui assure à la fois la semi-conduction de type p du polymère semi-conducteur et son absorption d'iode par migration d'ions iode provenant de l'électrolyte solide.

Pour préparer un générateur électrochimique dont le, ou chaque, élément comprend, en tant qu'électrolyte solide, du $RbAg_4I_5$ ou l'un de ses dérivés et où le générateur de matière active négative est un polymère organique rendu semi-conducteur de type n par dopage et simultanément générateur de la matière active argent, on prépare une ébauche de générateur électrochimique en y incorporant initialement le polymère organique à l'état non dopé ; puis, au moment où le générateur doit être activé pour la première fois, on fait passer dans l'ébauche un courant de charge, ce qui assure simultanément la semi-conduction de type n du polymère et son absorption de matière active négative par migration d'ions argent provenant de l'électrolyte solide.

Pour préparer un générateur électrochimique dont le, ou chaque, élément comprend, en tant qu'électrolyte solide, de l'alumine bêta $Al_2O_3$, $xNa_2O$ et où le générateur de matière active négative est un polymère organique rendu conducteur de type n par dopage et simultanément générateur de la matière active sodium (ou lithium), on prépare la partie anodique de l'ébauche du générateur électrochimique en y incorporant initialement le polymère organique à l'état non dopé. On fait passer du courant entre cette anode et un réservoir de sodium ou lithium (ou d'un composé, alliage ou sel de sodium ou lithium), on assure simultanément la conduction de type n du polymère et son absorption de matière active négative par migration d'ions sodium ou lithium, en provenance deudit réservoir, à travers la paroi d'alumine bêta dopée au sodium (pour le dopage au sodium) ou à travers la paroi perméable aux ions lithium (pour le dopage au lithium).

On peut ainsi stocker des ébauches de générateur électrochimique qui ne risquent pas de se dégrader aussi longtemps que l'on ne leur a pas fait subir leur première charge. En effet, c'est au cours de la première charge que

le passage du courant transforme partiellement l'électrolyte solide en matière active (exemples : argent pour la matière active négative, iode pour la matière active positive).

L'invention a enfin pour objet les ébauches de générateur pour la mise en oeuvre des procédés susvisés.

L'invention va être maintenant exposée plus en détail à l'aide de modes de réalisation préférés qui sont illustrés par les dessins annexés.

La figure 1 illustre l'un des procédés de préparation d'un générateur électrochimique conforme à l'invention.

La figure 2 représente schématiquement un générateur électrochimique conforme à l'invention, à un seul élément.

La figure 3 représente un générateur électrochimique conforme à l'invention, à plusieurs éléments.

La figure 4 est une courbe de décharge d'un générateur électrochimique conforme à l'invention.

Les figures 5 à 8 sont des courbes illustrant certaines des caractéristiques des susdits générateurs électrochimiques.

Le générateur électrochimique à un seul élément qui est représenté à la figure 2 comprend :

- une électrode 1, en métal (par exemple en platine ou en tantale), ou en graphite, ou analogue ;
- un compartiment de polymère semi-conducteur générateur de matière active positive 2, par exemple de polyacétylène générateur d'iode $(CHI_y)_n$ ;
- un électrolyte à superconducteur ionique 3, par exemple en iodure d'argent AgI, en iodure mixte $Rb\,Ag_4\,I_5$ ou $K\,Ag_4I_5$, en alumine bêta dopée, etc. ;
- un compartiment 4 de métal, par exemple en argent (fritté ou en feuille), ou en polymère semi-conducteur générateur de métal alcalin (polyacétylène générateur de sodium, polyparaphénylène générateur de potassium, etc.) ;

- une électrode 5, en métal (par exemple en platine ou argent) ou en graphite ou analogue.

Le générateur électrochimique qui est représenté à la figure 3 est constitué de plusieurs éléments en série, par exemple trois éléments dont chacun comprend les trois constituants 2, 3 et 4 du mode de réalisation précédent et qui sont reliés électriquement entre eux par un plaquage 6 de métal noble (or, platine) ou passivé (tantale, niobium, etc.). Aux constituants extérieurs 2 et 4 de l'empilement des trois éléments, sont adaptées des électrodes 1 et 5, analogues à celles qui sont désignées par les mêmes chiffres de référence à la figure 2. Ces éléments sont logés dans un cylindre 7 qui est obturé par des bouchons de résine 8, les électrodes 1 et 5 traversant ces bouchons 8.

Pour préparer les constituants du générateur électrochimique selon le mode de réalisation de la figure 2 ou 3, on procède en général de la façon suivante :

1°) <u>Préparation du polyacétylène dopé 2</u>.

Polyacétylène pur préparé par polymérisation de l'acétylène sur le catalyseur ZIEGLER-NATTA et conservé à l'abri de l'air. Masse volumique : 0,195 $g.cm^{-3}$ ; épaisseur du film : 2,42 mm. Dopage à l'iode par immersion pendant 17 heures dans une solution d'iode dans le pentane à la concentration de 1g d'iode par litre de pentane. La concentration d'iode atteinte dans le polymère est de 75 % en poids (poids d'iode/poids de polyacétylène), ce qui correspond à la fraction molaire I/C = 0,0768, soit la formule $(CHI_{0,0768})_n$. Des disques de 1,3 cm de diamètre sont préparés à l'emporte-pièce avec ce polyacétylène dopé.

2°) <u>Préparation de l'électrolyte solide 3</u>.

- $Rb\ Ag_4\ I_5$.

Des poudres d'iodure d'argent et d'iodure de rubidium très finement divisées sont intimement mélangées en proportions stoechiométriques puis soumises à des traitements thermiques sous atmosphère contrôlée pour obtenir l'iodure mixte dans

sa phase bêta. Après réaction, la poudre est frittée à une pression de 4 tonnes par $cm^2$ en pastilles de 1,3 cm de diamètre pendant 5 minutes.

- Alumine bêta dopée.

Après obtention de barreaux d'alumine bêta obtenus par frittage-desséchage à haute température de l'alumine pure et de l'oxyde , on usine par polissage mécanique des plaquettes ou des disques de 500 µ d'épaisseur.

3°) <u>Préparation de l'électrode génératrice de matière active négative 4</u> :

- Argent.

De la poudre d'argent fin (très haute pureté) est frittée à la pression de 5 tonnes par $cm^2$ en pastilles de 1,3 cm de diamètre.

- Polyacétylène dopé à l'argent.
  Le dosage est réalisé *in situ* au cours de la première charge (dopage électrochimique en phase solide).
- Polyacétylène dopé au sodium.
- Le dopage est réalisé par voie électrochimique.

Le tableau ci-dessous donne quelques valeurs de la f.é.m. des piles argent-iode respectivement à quelques températures :

| T (K) | f.é.m. avec Ta | f.é.m. avec Nb |
|---|---|---|
| 290 | 0,6235 | 0,6216 |
| 280 | 0,6223 | 0,6206 |
| 298,7 | 0,6227 | 0,6220 |
| 288 | 0,6219 | 0,6206 |
| 283 | 0,6213 | o,6201 |
| 278 | 0,6207 | 0,6195 |
| 273 | 0,6199 | 0,6187 |

La réaction de fonctionnement de la pile est la suivante :

- au pôle négatif (anode) :

$$Ag \longrightarrow Ag^{+} + e^{-}$$

- au pôle positif (cathode) :

$$\frac{1}{n.y}(CHI_y)_n + e^{-} \longrightarrow I^{-} + \frac{1}{n.y}(CH)_n$$

- et globalement :

$$Ag + \frac{1}{n.y}(CHI_y)_n \longrightarrow AgI + \frac{1}{n.y}(CH)_n.$$

Des données expérimentales, on déduit les paramètres thermodynamiques de la pile :

$$\Delta H° = 1\ 457\ cal.mole^{-1}$$
$$\Delta S° = 0,169\ cal.mole^{-2}.K^{-1}.$$

Selon un mode de réalisation à deux éléments

$$\ominus\ Pt/Ta/Ag/AgI/(CHI_y)_n/Ta/Ag/AgI/(CHI_y)_n/Pt\ \oplus\ ,$$

on obtient les caractéristiques suivantes :

. Tension en circuit ouvert : 1,2427 V à la température ordinaire, soit 2 x 0,6214, c'est-à-dire deux fois la tension d'un élément unique, ce qui confirme la qualité de l'instrumentation de mesure ainsi que la faisabilité de piles pouvant délivrer des f.é.m. de 0,62 (figure 2) ; 1,24 ; 1,86 V (figure 3) ; etc.

. L'intensité débitée I dépend de la résistance interne qui résulte pour l'essentiel de l'épaisseur de l'électrolyte solide ou iodure d'argent. AgI ne devient superconducteur par ions $Ag^{+}$ que dans la phase $\alpha$ , c'est-à-dire au-dessus de 147°C.

Conséquences

a) Il est possible de contrôler l'intensité de la pile simplement en jouant sur l'épaisseur de AgI ;

b) Pour augmenter l'intensité I, c'est-à-dire abaisser la résistance interne, on a réalisé avec succès les quatre prototypes suivants :

- Premier prototype :

Le disque d'argent 4, revêtu de tantale sur une face, est recouvert, sur son autre face, par une très fine couche d'iodure d'argent 3, forméepar oxydation en atmosphère d'iode (18 heures en vapeur saturante d'iode à la température ordinaire).

- Deuxième prototype :

$$\ominus\ Pt/Ta/Ag/(CHI_y)_n/Pt\ \oplus$$

On note l'absence de AgI : AgI se forme spontanément au cours même du fonctionnement électrochimique de la pile, ce qui réduit au minimum la résistance interne.

- Troisième prototype :

$$\ominus\ Pt/Ta/Ag/RbAg_4I_5/(CHI_y)_n/Pt\ \oplus$$

Ce prototype permet en fait d'abaisser également la résistance interne tout en conservant une encore meilleure reproductibilité de la f.é.m.

Pour réaliser ce troisième prototype, on commence par constituer ce qui a été appelé ci-dessus une ébauche de générateur électrochimique, cette ébauche comprenant tous les constituants de celui-ci, mis à part le fait que le polyacétylène n'est pas dopé à l'iode. Ce prototype comprend donc :

- une électrode à conduction métallique 1 (platine, tantale graphite, etc.) ;

- du polyacétylène 2 non dopé ;

- un électrolyte solide 3 du type dérivé d'AgI défini ci-dessus, en l'occurrence Rb $Ag_4$ $I_5$ ;
- un métal 4 qui est l'argent ;
- une électrode à conduction métallique 5 (platine, tantale, etc.).

La structure de l'ébauche est donc la suivante :

$$Ag/Rb\ Ag_4I_5/(CH)_n.$$

On fait alors passer un courant de charge, ce qui donne la structure suivante après la première charge :

$$Ag/Rb\ Ag_4I_5,\ \ Rb_2AgI_3/(CHI_y)_n$$

dont les caractéristiques sont les suivantes :

- Tension en circuit ouvert : 0,62 à 0,64 V à température ordinaire ;
- Courant de décharge obtention aisée d'une densité de courant de 0,5 $mA.cm^{-2}$.

La figure 4 donne un exemple de courbe de décharge du générateur selon l'invention, à la valeur du courant I = 66 µA (densité de courant : 118 µA $cm^{-2}$). On y a porté en abscisse le temps t (en heures) et en ordonnée la tension V (en volts).

Les avantages du troisième prototype et de son procédé de préparation sont les suivants :
- à l'état initial, les matériaux sont tous chimiquement stables : le générateur ne peut s'user avant sa mise en fonctionnement ;
- la matière active positive (iode) apparaît dans le générateur seulement au cours de la première charge ;

- stabilité de l'électrolyte garantie avant l'emploi (tension nulle) grâce à la pression nulle de l'iode ;
- stabilité de l'électrolyte garantie en cours d'utilisation grâce au maintien de la pression d'iode inférieure à la valeur à partir de laquelle apparaîtrait la décomposition catalytique de l'électrolyte ;
- recharge possible avec un courant beaucoup plus élevé que le courant normal de décharge, la recharge pouvant s'effectuer en quelques minutes ;
- le procédé original de dopage du polyacétylène par l'iode en phase solide permet d'obtenir le composé $(CHI_{0,20})_n$, soit un dopage supérieur à ce qui est obtenu par voie électrochimique en solution.
- <u>Quatrième prototype</u> :

$$\ominus\ C/(CH)_n/RbAg_4I_5/(CH)_n/C\ \oplus\ \underline{ou}\ C/Ag/RbAg_4I_5/(CH)_n/C$$

qui devient une fois chargé :

$$C/(CH)_n - Ag/RbAg_4I_5,Rb_2AgI_3/(CHI_{y'})_n/C.$$

Ce prototype permet d'abaisser le prix des matériaux en supprimant le platine, le tantale et une partie de l'argent. Les performances et les caractéristiques observées sur cent modèles de dimensions variables de ce prototype sont les suivantes :

. Courant de court-circuit : 5-60 mA ;

. Densité de courant de court-circuit : 10-100 $mA.cm^{-2}$ ;

. Débit : la figure 5 représente l'enregistrement du courant de court-circuit I (en mA) en fonction du temps t (en minutes) pendant les cinq premières minutes de ce régime.

La figure 6 représente le courant de court-circuit I (en mA) en fonction de l'inverse de la racine carrée du temps (en secondes). La courbe est une droite qui passe par l'origine. On conclut que c'est le flux d'iode diffusant

dans le polymère qui contrôle le débit du courant. Cette observation est confirmée quantitativement par la mesure du transport de l'iode marqué par un isotope radioactif ;

. Courbes de décharge à courant constant. La figure 4 montre la force électromotrice, au cours du temps, pour un débit de 66 µA. Elle varie peu par rapport à la tension en circuit ouvert (0,62 - 0,65 V) ;

. Tension en circuit ouvert : 0,62 à 0,65 V par élément ;

. Résistance interne : 10 - 100 Ω ;

. F.é.m. : La figure 7 représente les valeurs de la f.é.m. U (en volts) de début de décharge, pour divers régimes de débit à courant constant ;

. Rendement faradaïque. La figure 8 représente des décharges à courant constant pour des courants de 0,4 et 0,6 mA (courant de charge : 0,25 mA) en fonction de la capacité. Le rendement faradaïque passe de 80 à 54 % ; les rendements supérieurs sont obtenus pour des courants moins élevés ;

. Rendement énergétique . Dans les exemples précédents, le rendement énergétique passe de 60 à 43 %.

- Cinquième prototype :

$$C/(CHNa_y)_n/Al_2O_3,xNa_2O/(CHI_y)_n/C$$

Ce prototype, illustré par la figure 1, présente les avantages suivants :

. Fonctionnement à la température ordinaire ;

. Valeur élevée de la f.é.m. jusqu'à 2,70 V ;

. Forte augmentation de la densité d'énergie grâce, d'une part, à la faible masse atomique du sodium et, d'autre part, à la forte valeur de la f.é.m.

L'anode de polyacétylène dopé au sodium est réalisée par la méthode de dopage électrochimique en phase solide, décrite ci-dessus et illustrée par la figure 1, afin d'éviter toute oxydation du sodium. Ce procédé original de dopage du polyacétylène par le sodium en phase solide permet d'obtenir

le composé $(CHNa_{0,2})_n$, soit un dopage supérieur à ce qui est obtenu par voie électrochimique en solution.

REVENDICATIONS

1. Générateur électrochimique, comprenant, entre des électrodes à conduction métallique usuelles, au moins un électrolyte solide séparant, d'un corps solide générateur de matière active négative, un polymère semi-conducteur rendu, par dopage, conducteur de l'électricité et générateur de la matière active positive de la réaction électrochimique, caractérisé en ce que l'électrolyte solide est constitué par un superconducteur ionique.

2. Générateur électrochimique selon la revendication 1, caractérisé en ce que le corps solide générateur de matière active négative est constitué par un polymère semi-conducteur rendu, par dopage, conducteur de l'électricité et générateur de cette matière active négative.

3. Générateur électrochimique selon l'une des revendications 1 et 2, caractérisé en ce que le polymère semi-conducteur est le polyacétylène ou le paraphénylène.

4. Générateur électrochimique selon l'une quelconque des revendications 1 à 3, caractérisé en ce que le polymère semi-conducteur générateur de matière active positive est le polyacétylène dopé à l'iode.

5. Générateur électrochimique selon l'une quelconque des revendications 1 à 4, caractérisé en ce que le superconducteur ionique est de l'iodure d'argent ou un iodure mixte $RbAg_4I_5$ ou dérivé par substitution de l'alcalin ou de l'halogène.

6. Générateur électrochimique selon l'une quelconque des revendications 1 à 4, caractérisé en ce que le superconducteur ionique est de l'alumine bêta, dopée au sodium, au lithium ou à l'argent.

7. Procédé de préparation d'un générateur électrochimique selon la revendication 5 dont le, ou chaque, élément comprend, en tant qu'électrolyte solide, de l'iodure d'argent AgI et, en tant que générateur de matière active positive, un polymère semi-conducteur dopé à l'iode,

caractérisé en ce qu'on prépare une ébauche de générateur électrochimique en remplaçant initialement l'iodure d'argent par de l'argent pur et en ce qu'on fait fonctionner le générateur électrochimique, ce qui assure la formation spontanée de l'électrolyte solide par migration dans l'argent d'ions provenant du polymère dopé.

8. Procédé de préparation d'un générateur électrochimique selon la revendication 5 dont le, ou chaque, élément comprend, en tant qu'électrolyte solide, du $RbAg_4I_5$ ou l'un de ses dérivés et où le générateur de matière active positive est un polymère organique rendu semi-conducteur de type p par dopage et simultanément générateur de la matière active iode, caractérisé en ce qu'on prépare une ébauche de générateur électrochimique en y incorporant initialement le polymère organique à l'état non dopé et en ce que, au cours de la première charge, on fait passer dans l'ébauche un courant de charge, ce qui assure à la fois la semi-conduction de type p du polymère semi-conducteur et son absorption d'iode par migration d'ions provenant de l'électrolyte solide.

9. Procédé de préparation d'un générateur électrochimique selon la revendication 5, où le générateur de matière active négative est un polymère organique rendu semi-conducteur de type n par dopage et simultanément générateur de la matière active négative argent, caractérisé en ce qu'on prépare une ébauche de générateur électrochimique en y incorporant initialement le polymère organique à l'état non dopé et en ce qu'au moment où le générateur doit être activé pour la première fois, on fait passer dans l'ébauche un courant de charge, ce qui assure simultanément la semi-conduction de type n du polymère et son absorption de matière active négative par migration d'ions argent provenant de l'électrolyte solide.

10. Procédé de préparation d'un générateur électrochimique selon la revendication 6 où le générateur de matière

active négative est un polymère organique rendu conducteur de type n par dopage et simultanément générateur de la matière active négative sodium ou lithium, caractérisé en ce qu'on prépare la partie anodique de l'ébauche de générateur électrochimique en y incorporant initialement le polymère organique à l'état non dopé et qu'en faisant passer du courant entre cette anode et un réservoir de sodium ou lithium (ou d'un composé, alliage, ou sel de sodium ou lithium), on assure simultanément la conduction de type n du polymère et son absorption de matière active négative par migration d'ions sodium à travers la paroi d'alumine bêta dopée au sodium, pour un dopage au sodium, ou à travers la paroi perméable aux ions lithium, pour le dopage au lithium.

11. Ebauche de générateur électrochimique pour la mise en oeuvre du procédé selon l'une quelconque des revendications 7 à 10.

Fig:1

DOPAGE ÉLECTROCHIMIQUE AU SODIUM DU $(CH)_n$ → ÉLÉMENT $(CHNa_y)_n$ / ALUMINE β / $(CHI_{y'})_n$

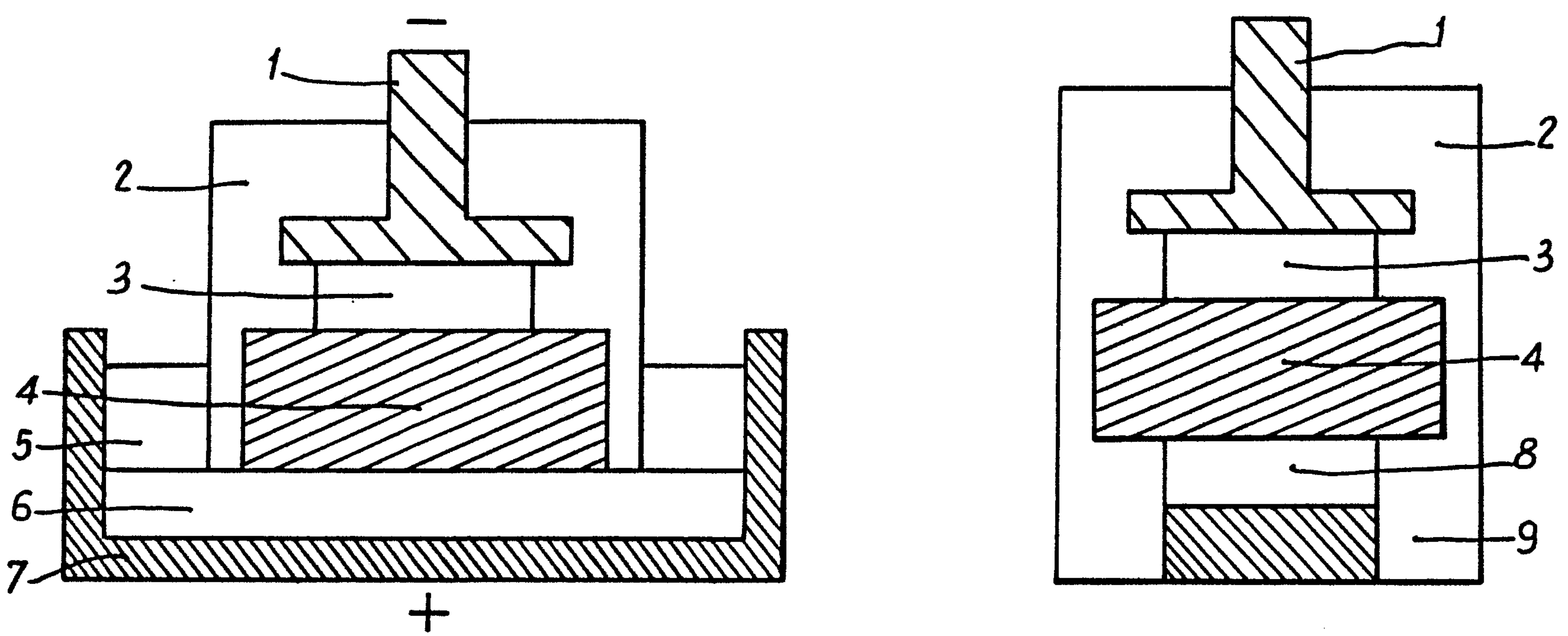


1. ACIER
2. RÉSINE
3. $(CH)_n$
4. ALUMINE β
5. ISOLANT
6. SODIUM
7. CUIVRE
8. $(CHI_y)_n$
9. GRAPHITE

Fig: 2

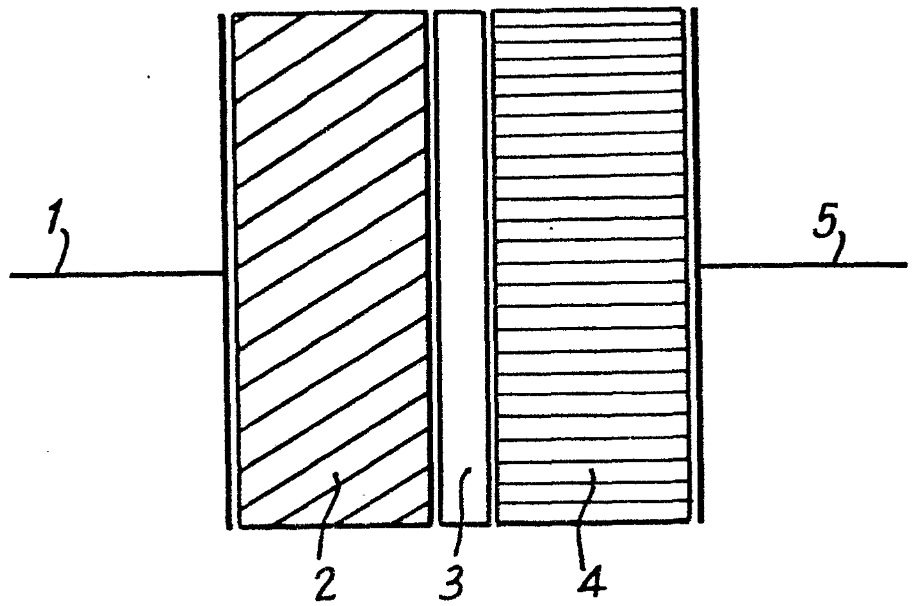


Fig: 3

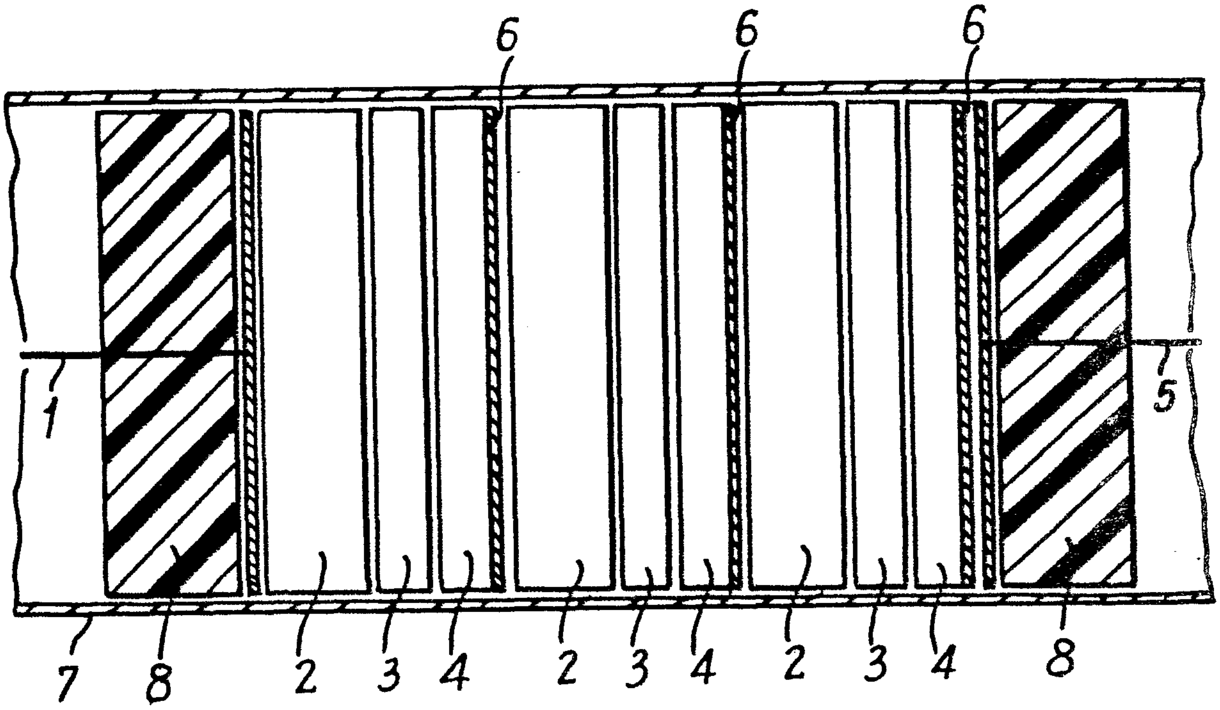

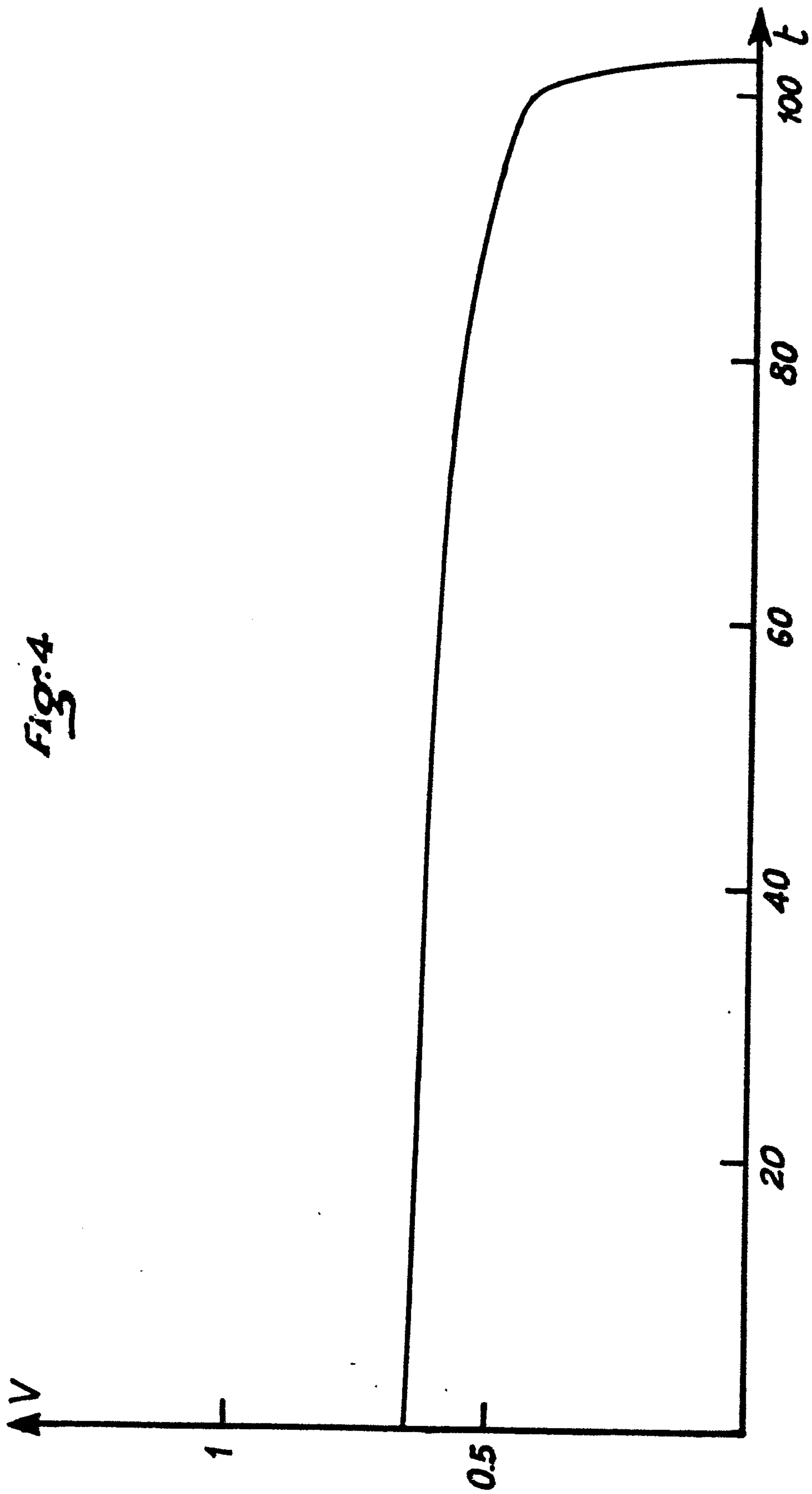


Fig.4

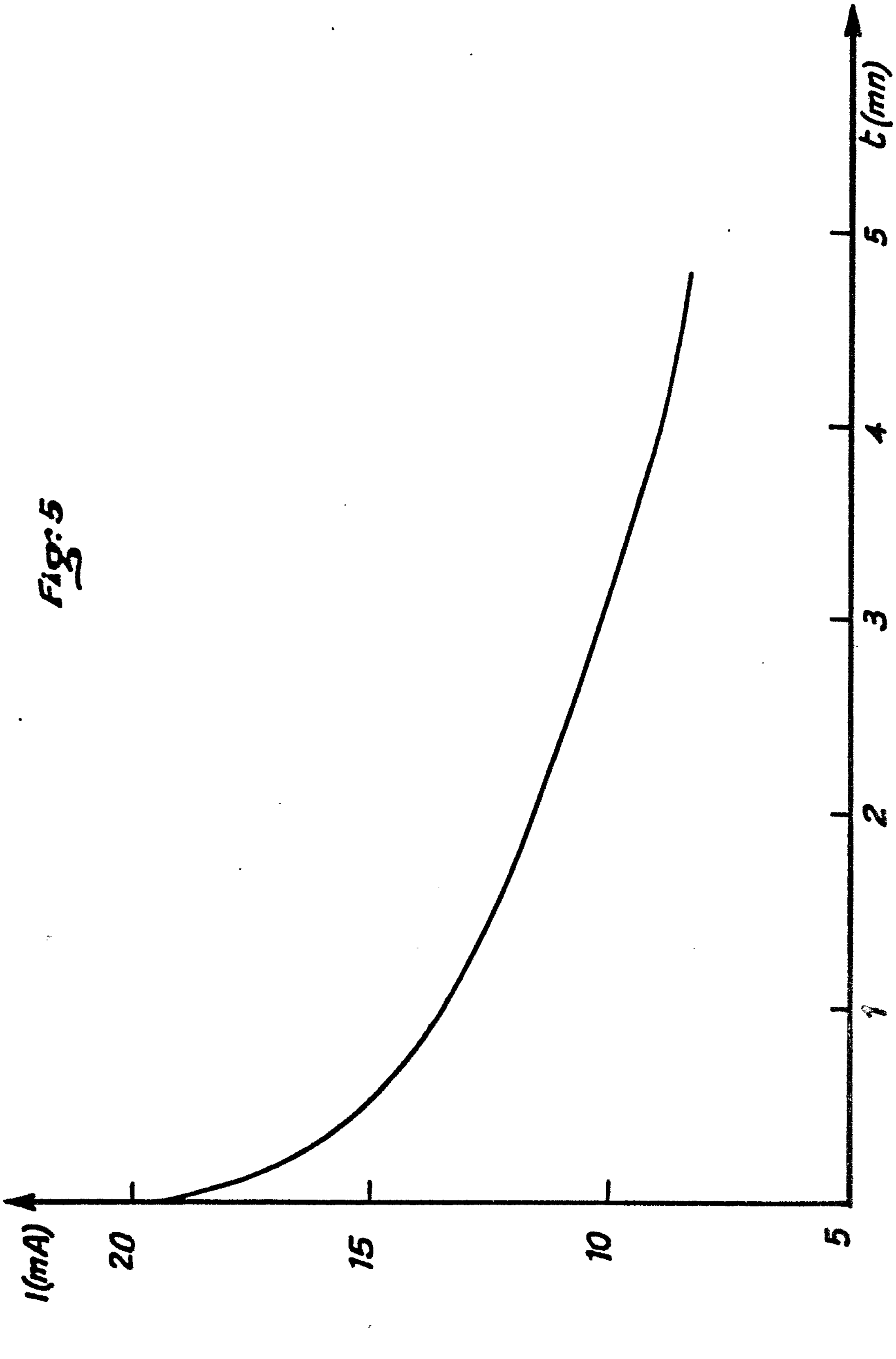


Fig: 5

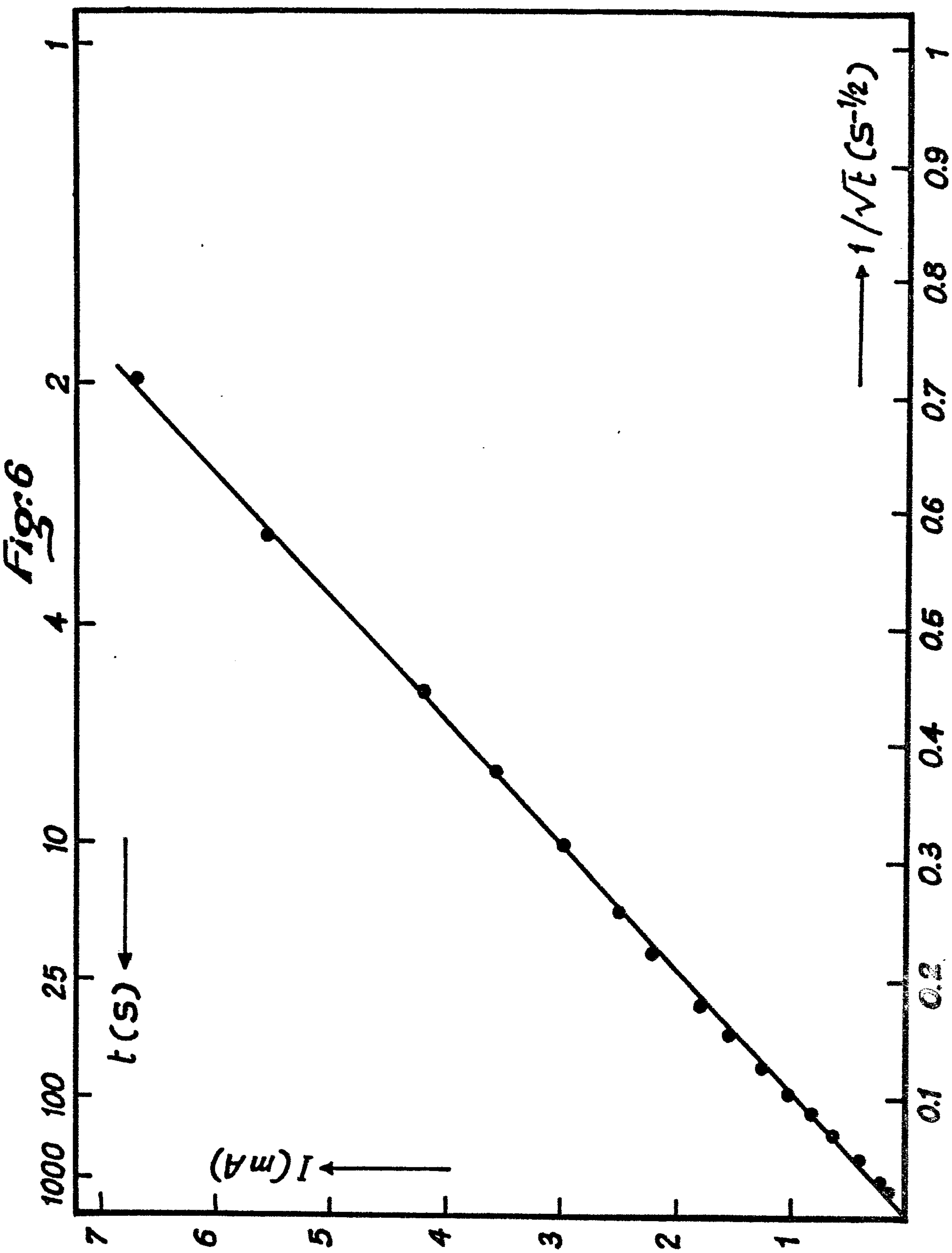


Fig: 6

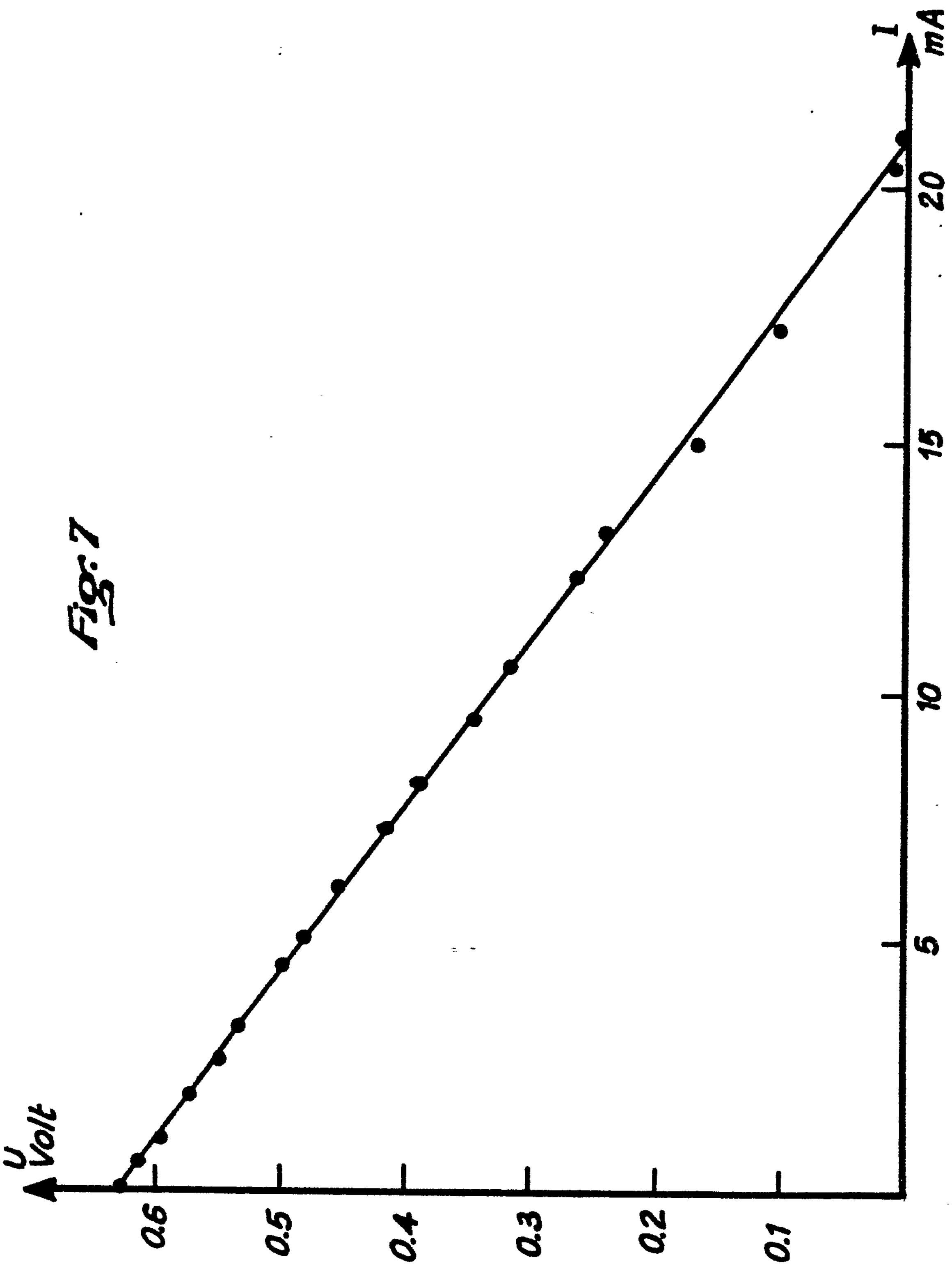


Fig. 7

Fig. 8

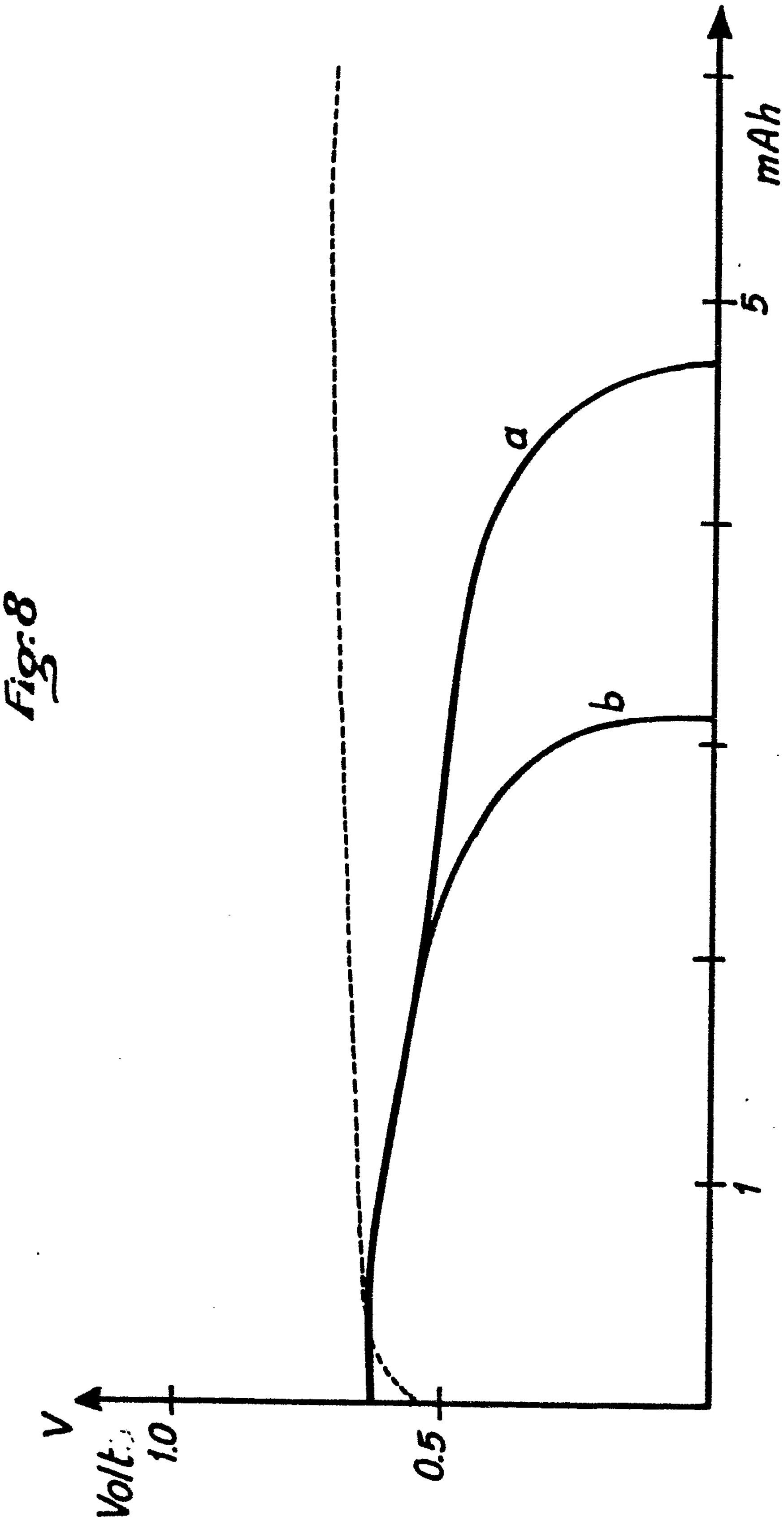

Office européen des brevets

# RAPPORT DE RECHERCHE EUROPEENNE

0061962

Numéro de la demande

EP 82 40 0501

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | JOURNAL CHEM. SOC. CHEM. COMMUNICATIONS, vol. 14, 1979 (US) P.J. NIGREY et al.: "Electrochemistry of polyacetylene $(CH)_x$: electrochemical doping of $(CH)_x$ films to the metallic state" pages 594-595 * en entier * | 1-4 | H 01 M 10/36<br>6/18<br>4/60 |
| Y | FR - A - 2 180 009 (WESTERN ELECTRIC CO.) * page 8, lignes 29-37; page 9, lignes 1-6; page 12, revendications 1,7 * | 1,5,7 | |
| | | | DOMAINES TECHNIQUES RECHERCHES (Int. Cl. 3) |
| D,E | EP - A - 0 036 118 (UNIVERSITY PATENTS) * page 8, lignes 16-35; page 9, page 17, lignes 4-15; pages 45-49, page 56, claims 1,2,3 * | 1-4 | H 01 M 10/36<br>4/60<br>6/18 |
| P,X | PATENTS ABSTRACTS OF JAPAN, vol. 5, no. 113(E66), 22 juillet 1981 page 785 & JP - A - 54 128 665 (CITIZEN TOKEI) * résumé en entier * ./. | 1,3,4 | |

Le présent rapport de recherche a été établi pour toutes les revendications

| Lieu de la recherche | Date d'achèvement de la recherche | Examinateur |
|---|---|---|
| La Haye | 25-06-1982 | DE VOS |

CATEGORIE DES DOCUMENTS CITES

X : particulièrement pertinent à lui seul
Y : particulièrement pertinent en combinaison avec un autre document de la même categorie
A : arrière-plan technologique
O : divulgation non-ecrite
P : document intercalaire
T : théorie ou principe à la base de l'invention
E : document de brevet antérieur, mais publié à la date de depôt ou après cette date
D : cite dans la demande
L : cite pour d'autres raisons
& membre de la même famille, document correspondant

Numéro de la demande

Office européen des brevets

# RAPPORT DE RECHERCHE EUROPEENNE

EP 82 40 0501



| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendication concernée | |
| P | LA RECHERCHE, no. 126, octobre 1981<br>PARIS (FR)<br>F. BENIERE: "La percée des files plastiques"<br>pages 1132-1134<br><br>* en entier *<br><br>--- | 1-9 | |
| A | US - A - 4 222 903 (ALAN J. HEEGER) | | |
| A | GB - A - 1 557 066 (MATSUSHITA) | | DOMAINES TECHNIQUES RECHERCHES (Int. Cl.³) |
| A | FR - A - 2 442 514 (ANVAR)<br><br>--------- | | |